# EUROPEAN PATENT APPLICATION

(11) **EP 2 544 106 A1**
(43) Date of publication of application: **09.01.2013**
(21) Application number: 12174917.0
(22) Date of filing: 04.07.2012
(51) Int. Cl.: G06F 17/30

(54) **Handling content related to digital visual objects**

(30) Priority: 08.07.2011 US 201161505673 P
(71) Applicant: Thinglink Oy, 00100 Helsinki (FI)
(72) Inventor: Jalkanen, Janne, 02160 Espoo (FI); Aukia, Janne, 02270 Espoo (FI)
(74) Representative: Lamberg, Samu Petteri

(57) **Abstract**

A computer implemented method including: receiving a link to a webpage to be associated with a visual object in an overlay element, identifying the link as a transmutable link, transmuting the link into an application link, receiving a request for content for an overlay element for the visual object, and providing, in response to said request, the application link as a designated source of content of the overlay element for said visual object.

## Description

### TECHNICAL FIELD

The present invention generally relates to handling content of digital visual objects.

### BACKGROUND ART

World Wide Web (WWW) includes loads of images. Often there is interest in associating images with further information or other digital content as an image often raises questions about items of details in the image.

### SUMMARY

According to a first example aspect of the invention there is provided a method comprising:
receiving a link to a webpage to be associated with a visual object in an overlay element,
identifying the link as a transmutable link,
transmuting the link into an application link,
receiving a request for content for an overlay element for said visual object, and
providing, in response to said request, the application link as a designated source of content of said overlay element for said visual object.

The method may further comprise displaying said overlay element as an iframe element.

Said visual object may be an image or a video.

The method may further comprise rendering of the overlay element using a browser plugin script, a javascript script and/or a binary executable.

The method may further comprise providing, together with the application link, further configuration information for the overlay element.

Said further configuration information may comprise size of the overlay element, layout of the overlay element, and/or destination location of the overlay element on said visual object.

The overlay element may be an iframe element and the method may further comprise providing, together with the application link, further configuration information for the iframe element.

The method may further comprise notifying sender of the link of the transmutation.

The transmutation may be performed in response to said request. The transmutation may performed before receiving said request.

The method may further comprise performing said identifying and transmuting by using rules indicating how a certain type of link is to be transmuted into an application link.

According to a second example aspect of the invention there is provided an apparatus comprising:
a processor; and
a memory including computer program code; wherein
the memory and the computer program code in combination with the processor, are configured to cause the apparatus to perform:
   receiving a link to a webpage to be associated with a visual object in an overlay element,
   identifying the link as a transmutable link,
   transmuting the link into an application link,
   receiving a request for content for an overlay element for said visual object, and
   providing, in response to said request, the application link as a
   designated source of content of said overlay element for said visual object.

The memory and the computer program code in combination with the processor may be configured to cause the apparatus to perform providing, together with the application link, further configuration information for the overlay element.

Visual object may be an image or a video.

According to a third example aspect of the invention there is provided a computer readable non-transitory medium embodying computer executable program code configured to be executed by a processor of an apparatus, to cause the apparatus to perform:
receiving a link to a webpage to be associated with a visual object in an overlay element,
identifying the link as a transmutable link,
transmuting the link into an application link,
receiving a request for content for an overlay element for said visual object, and
providing, in response to said request, the application link as a designated source of content of said overlay element for said visual object.

Different non-binding example aspects of the present invention have been illustrated in the foregoing.

### BRIEF DESCRIPTION OF THE DRAWINGS

The invention will be described, by way of example only, with reference to the accompanying drawings, in which:
- Fig. 1: shows a scenario according to an example embodiment;
- Fig. 2: shows a flow diagram of a method according to an example embodiment;
- Fig. 3: shows a flow diagram of a method according to another example embodiment; and
- Fig. 4: shows a block diagram of an apparatus according to an example embodiment.

### DETAILED DESCRIPTION

It is possible to associate a digital visual object (such as an image or video) with overlay content that is shown when the viewer of the visual object moves cursor or mouse or some other pointing or selection device over the visual object. The overlay content may hover over the visual object. The overlay content can be for example a visual object tag that includes textual description of the visual object content or a popup window that can includes for example an advertisement or further visual object information.

Traditionally the overlay content that is to be shown in the tag or popup window has been pre-ordained within the front-end code (e.g. Javascript or CSS code) that is used to display the visual object or the web page including the visual object. The overlay content may be retrieved using an API offered by the provider of the overlay content, but the front-end code itself needs to be updated every time a change for example in layouts of the overlay content is required.

In an embodiment of the invention there is provided an arrangement in which the front-end code does not need to be changed when the overlay content is changed. This effect is obtained by using front-end code comprising a piece of visual object overlay content code that is configured to fetch dynamic content from a designated source. In an embodiment the piece of visual object overlay content code is configured to employ an application link instead of simple textual information or a simple link to a site with further information. In an example embodiment there is provided a system that automatically transmutes simple links to application links.

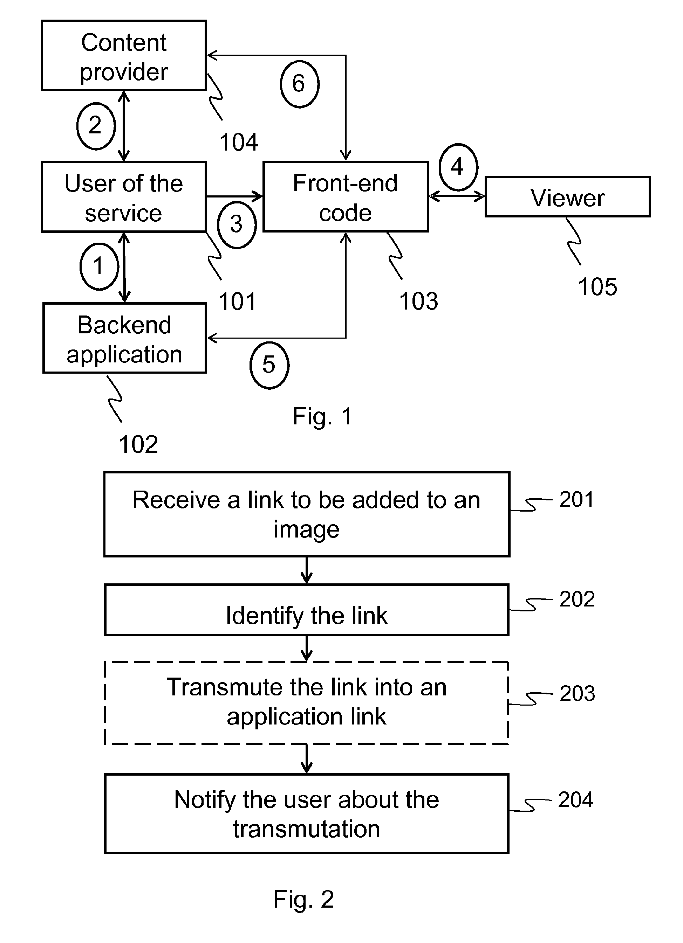

In an embodiment, the method further comprises rendering of the overlay element using one or more of the following: a browser plugin script; a javascript script; and a binary executable. The plugin script, javascript script and/or binary executable can be stored on the site that stores a backend application or server (see Fig. 1). Herein the term transmute or transmutation refers to conversion or transformation or changing of information from one form into another associated form.

In an embodiment of the invention HTML and CSS standards are used in a new and inventive way. In an example a piece of visual object overlay content code is embedded on a front-end code of a target website, and this visual object overlay content code is configured to load the overlay contents from a designated website. In an embodiment the visual object overlay content code comprises an iframe element of HTML and the overlay content is loaded within the iframe element.

An iframe (Inline Frame) element defines an HTML document embedded inside another HTML document on a web page. The iframe HTML element can be used to insert content from another source into a webpage. Although an iframe behaves like an inline image, it can be configured with its own scrollbar independent of the surrounding page's scrollbar.

Iframe elements run in their own personal sandbox and do not interfere with the rest of the site.

In an embodiment of the invention the iframe element is used for providing overlay content associated with an image. An iframe element code is typically not intended to be shared with other users. Instead an iframe element code is typically intended for embedding an inline element on a webpage and a simple link to the originating webpage is typically the information that is shared with other users. Embedding an inline element on an image is however not a practical solution. In the presently provided solution an iframe element is used as an overlay element instead of an inline element and in this way it is possible to use iframe elements in association with images.

In an embodiment of the invention there is provided a new and inventive method in which a simple link URL to be associated with a visual object on a webpage is automatically transmuted into an application URL, and then a custom-designed application is displayed over the visual object inside an HTML iframe element. In this way it is possible to dynamic overlay content without the need to change the front-end code of the web page. Additionally, in this way one achieves that dynamic content from a third party source can be provided for viewers of the webpage while the viewers stay on the original webpage. That is, there is no longer need to guide viewers to the third party site for the dynamic content. Instead the viewers can be provided with a possibility to access e.g. a third party web shop while staying on the original webpage.

In an example embodiment there is provided a computer implemented method that comprises:
receiving a link to a webpage to be associated with a visual object in an overlay element,
identifying the link as a transmutable link,
transmuting the link into an application link,
receiving a request for content for an overlay element for said visual object, and providing, in response to said request, the application link as a designated source of content of said overlay element for said visual object.

In an example embodiment the link to a webpage is a simple URL, that is, an address of a web page, or other web resource, such as a web video, web image, Twitter™ account, Facebook™ page and so on. In an example embodiment the application link uniquely identifies a player or other display component for the resource identified by the link. For example, the link may comprise a Wikipedia page, and the application link would be a link to an application capable of showing the first 300 characters of the article, in a manner compatible with a small tag displayed over a visual object.

The transmutation can be performed in response to receiving the request for content or before receiving the request (e.g. in response to identifying the link as a transmutable link).

In an example embodiment the overlay element is an iframe element.

In an example embodiment further configuration information for the overlay element is provided together with the application link. The further configuration information can include for example size of the overlay element, layout of the overlay element, and/or a destination location of the overlay element on a webpage comprising said visual object.

In an example embodiment the sender of the link to the webpage is notified of the transmutations. The notification can be performed either before the transmutation of after the transmutation.

In an example embodiment the identifying and transmuting are performed by using rules indicating how a certain type of link is to be transmuted into an application link.

Figure 1 shows a scenario according to an embodiment of the invention. It must be noted that the units shown in Figure 1 are not necessarily physically separate units but instead different logical entities. The scenario comprises a user of the service 101, a backend application or backend server 102, an external content provider 104, a front-end code 103 for a web page and a viewer 105 of the web page. Functionality provided by various embodiments of the invention in the scenario of Figure 1 is explained in more detail below.

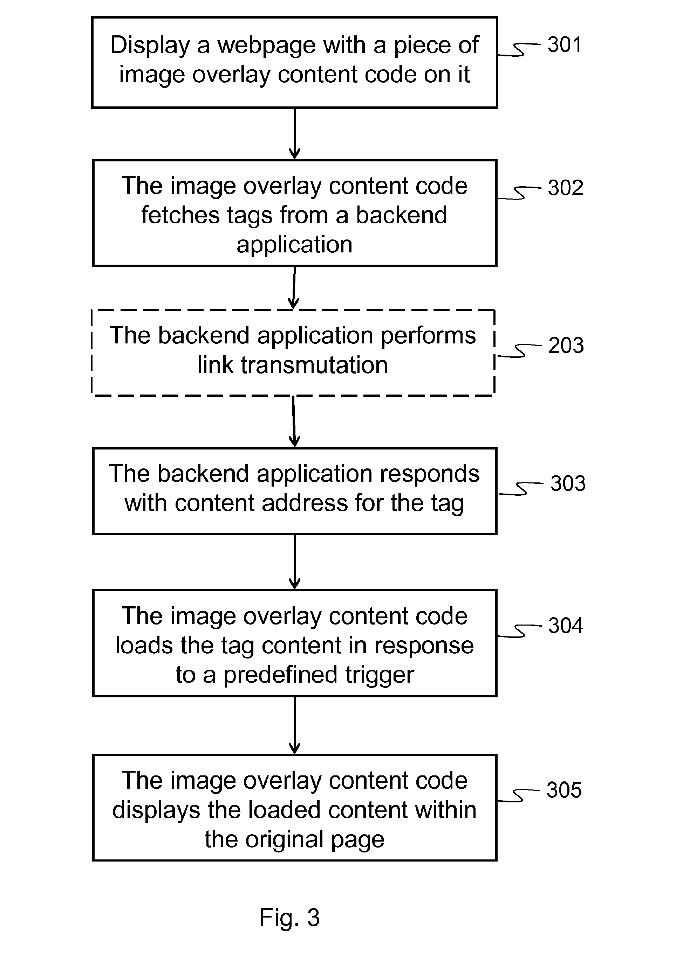

Figures 2 and 3 show flow diagrams of example methods that can take place in the scenario of Figure 1.

Figure 2 illustrates a tagging flow (creation of the visual object overlay content code) according to an example embodiment.

In phase 201, a backend application receives from a user of the service (provided by the backend application) a link to be added to a visual object. In an example embodiment the user loads an editor application and creates the link using the editor. In an example, the link is www.youtube.com/watch/XXX. Arrow 2 in Figure 1 illustrates that the user identifies external content to which the user want to have a link in their webpage.

In phase 202, the backend application identifies that the link received from the user is a link that can be transmuted into an application link In an example transmutation the example link above could be changed to www.youtube.com/embed/XXX. In an example embodiment the backend application performs the transmutation in phase 203 if the transmutation is possible. In that case the transmuted link can be stored in a database for later use. In an alternative embodiment the transmutation is performed in a later stage when the webpage with the tagged visual object is viewed by an end user.

In phase 204 the user is notified about the transmutation. The notification is performed irrespective of whether the transmutation has been actually done or not.

Arrow 1 in Figure 1 illustrates the interaction of phases 201-203 between the user and the backend application.

The visual object overlay content code is then automatically or manually embedded in the front-end code of the user's webpage, arrow 3 in Figure 1.

Figure 3 illustrates a viewing flow according to an example embodiment.

In phase 301, a webpage with a piece of visual object overlay content code is displayed to a viewer, arrow 4 in Figure 1.

In phase 302, the visual object overlay content code fetches tags for example using a HTTP request method from a backend application. As an example, the visual object t overlay content code may call http://www.thinglink.com/api/tags/123,345,454. Then, in phase 303, the backend application responds with the transmuted application link, that is, a designated address for fetching content for the tag, arrow 5 in Figure 1. In an example embodiment the backend application uses a previously stored transmuted link. In an alternative embodiment the backend application performs the transmutation on the fly in phase 203, that is, only when the link is actually needed (requested from the backend application). In an example embodiment, the visual object overlay content code is configured to use an iframe element for displaying the overlay content and the backend application provides to the visual object overlay content code size of the iframe element and URL of the content to be placed inside the iframe element. In an example the response received from the backend application comprises a JSON or XML response that describes the tag layout and content, including the destination location of the iframe.

In phase 304, the visual object overlay content code loads the tag content from the designated address (certain webpage) in response to a predefined trigger. For example, the loading of the content can be performed when showing of the visual object overlay content is triggered (the trigger for loading the content being activating the visual object associated with overlay content, for example) or the content can be loaded beforehand on the background (the trigger for loading the content being opening the webpage with the visual object associated with overlay content, for example). Arrow 6 in Figure 1 illustrates the loading of the overlay content.

In phase 305, the visual object overlay content code displays the loaded content as a visual object overlay content within the original webpage. In an example embodiment the loaded content is interactive content.

In an example embodiment the visual object overlay content code injects a hover-activated iframe element on the target visual object such that the iframe contents are fetched in a delayed fashion. Alternatively, the iframe element may be activated by a click on a particular spot on the visual object.

Embodiments of the present invention may be implemented in software, hardware, application logic or a combination of software, hardware and/or application logic. The software, application logic and/or hardware may reside on a server of a service provider (such as the backend application 102 of Figure 1).

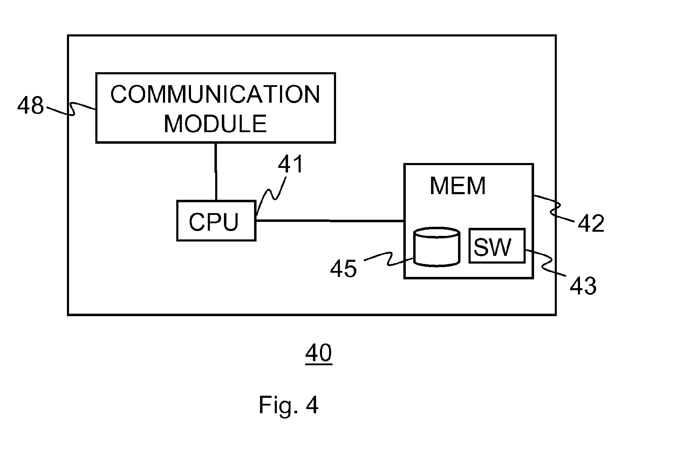

In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer or some other electronic device, with an example of such device described and depicted in Figure 4 below. The computer-readable medium may be a digital data storage such as a data disc or diskette, optical storage, magnetic storage, or opto-magnetic storage. The computer-readable medium may be formed into a device without other substantial functions than storing memory or it may be formed as part of a device with other functions, including but not limited to a memory of a computer, a chip set, and a sub assembly of an electronic device.

Figure 4 shows an example block diagram of an apparatus 40 according to certain example embodiments of the invention. The apparatus 40 may be implemented on a general purpose computer or a server for example and it may provide the backend application 102 of Figure 1.

The apparatus 40 comprises at least one memory 42 configured to store computer program code (or software) 43. The memory 42 may comprise a database 45, but this is not mandatory. The apparatus 40 further comprises at least one processor 41 for controlling the operation of the apparatus 40 using the computer program code 43. Additionally the apparatus 40 comprises a communication module 48.

The at least one processor 41 may be a master control unit (MCU). Alternatively, the at least one processor 41 may be a microprocessor, a digital signal processor (DSP), an application specific integrated circuit (ASIC), a field programmable gate array, a microcontroller or a combination of such elements. Figure 4 shows one processor 41, but the apparatus 40 may comprise a plurality of processors 41.

The at least one memory 42 may be, for example, random access memory, flash memory, hard disk, hard disk array, optical storage, memory stick, memory card and/or magnetic memory. The apparatus 40 may comprise a plurality of memories. The memory 42 may be constructed as a part of the apparatus 40 or it may be inserted into a slot, port, or the like of the apparatus 40 by a user. The memory 42 may serve the sole purpose of storing data, or it may be constructed as a part of an apparatus serving other purposes, such as processing data. The database 45 may be for example an SQL-database. The database may be used for information about how certain types of links are transmuted into application links or some other rules of processing.

The communication module 48 may be for example a fixed line communication module, e.g. an Ethernet or LAN communication module or even a radio communication module, e.g., a WLAN, GSM/GPRS, or WCDMA radio module.

The at least one processor in combination with the computer program 43 and the communication module 48 is configured to implement at least some features of various embodiments of the invention described above.

A skilled person appreciates that in addition to the elements shown in Figure 4, the apparatus 40 may comprise other elements, such as batteries, microphones, displays, as well as additional circuitry such as input/output (I/O) circuitry, memory chips, and the like.

Various embodiments of the invention provide that one may gain
1. Improved control over how tags are shown on a site.
2. Simpler construction of tag contents.
3. Ability to use content residing on third party servers without a need to replicate the content to the originating server, since the iframe contents don't need to be loaded from the originating server but can be loaded directly form he third party server.
4. Ability to automatically transform simple shareable URLs into iframe URLs.
5. Ability provide versatile functionality without a need to guide the user away from the originating site.

Various embodiments have been presented. It should be appreciated that in this document, words comprise, include and contain are each used as open-ended expressions with no intended exclusivity.

The foregoing description has provided by way of non-limiting examples of particular implementations and embodiments of the invention a full and informative description of the best mode presently contemplated by the inventors for carrying out the invention. It is however clear to a person skilled in the art that the invention is not restricted to details of the embodiments presented above, but that it can be implemented in other embodiments using equivalent means or in different combinations of embodiments without deviating from the characteristics of the invention. It is also noted that the above embodiments are used merely to explain selected aspects or steps that may be utilized in implementations of the present invention. Some features may be presented only with reference to certain example embodiments of the invention. It should be appreciated that corresponding features may apply to other embodiments as well.

Furthermore, some of the features of the above-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A computer implemented method comprising:
receiving a link to a webpage to be associated with a visual object in an overlay element,
identifying the link as a transmutable link,
transmuting the link into an application link,
receiving a request for content for an overlay element for said visual object, and
providing, in response to said request, the application link as a designated source of content of said overlay element for said visual object.

2. The method of claim 1, further comprising displaying said overlay element as an iframe element.

3. The method of claim 1 or 2, wherein said visual object is an image.

4. The method of claim 1 or 2, wherein said visual object is a video.

5. The method of any of preceding claims, further comprising rendering of the overlay element using a browser plugin script or using a javascript script.

6. The method of any of preceding claims, further comprising rendering of the overlay element using a binary executable.

7. The method of any of preceding claims, further comprising providing, together with the application link, further configuration information for the overlay element, wherein said further configuration information comprises at least one of the following: size of the overlay element; layout of the overlay element; and destination location of the overlay element on said visual object.

8. The method of any of preceding claims, wherein said overlay element is an iframe element and the method further comprises providing, together with the application link, further configuration information for the iframe element.

9. The method of any of preceding claims, further comprising notifying sender of the link of the transmutation.

10. The method of any of preceding claims, wherein said transmutation is performed in response to said request.

11. The method of any of claims 1 to 9, wherein said transmutation is performed before receiving said request.

12. The method of any of preceding claims, further comprising performing said identifying and transmuting by using rules indicating how a certain type of link is to be transmuted into an application link.

13. An apparatus comprising:
a processor; and
a memory including computer program code; wherein
the memory and the computer program code in combination with the processor, are configured to cause the apparatus to perform:
receiving a link to a webpage to be associated with a visual object in an overlay element,
identifying the link as a transmutable link,
transmuting the link into an application link,
receiving a request for content for an overlay element for said visual object, and
providing, in response to said request, the application link as a designated source of content of said overlay element for said visual object.

14. The apparatus of claim 13, wherein the memory and the computer program code in combination with the processor, are configured to cause the apparatus to perform the method of any of claims 2 to 12.

15. A computer readable non-transitory medium embodying computer executable program code configured to be executed by a processor of an apparatus, to cause the apparatus to perform the method of any of claims 1 to 12.
